# EUROPEAN PATENT SPECIFICATION

(11) **EP 0 476 423 B1**
(45) Date of publication and mention of the grant of the patent: **12.07.1995**
(21) Application number: 91114874.0
(22) Date of filing: 03.09.1991
(51) Int. Cl.: D06F 37/22, G01M 1/32, G01M 1/08

(54) **System for detecting and rectifying unbalance during centrifuge in industrial washing machines**
System zum Feststellen und Korrigieren der Unwucht von Industriewaschmaschinen während des Schleuderns
Système pour détecter et rectifier le balourd pendant l'essorage dans les machines à laver industrielles

(30) Priority: 05.09.1990 IT 8561390
(43) Date of publication of application: 25.03.1992
(73) Proprietor: Tonello, Osvaldo, I-36030 Sarcedo (VI) (IT)
(72) Inventor: Tonello, Osvaldo, I-36030 Sarcedo (VI) (IT)
(74) Representative: Bonini, Ercole

(56) References cited:
- CH-A- 672 803
- DE-A- 2 405 051
- FR-A- 2 573 206
- GB-A- 2 138 029

## Description

The invention concerns a system for detecting and correcting the unbalance during the centrifugal cycle in industrial washing machines presenting a revolving basket.

The industrial washing machines with revolving baskets used both for washing and for dying either cloth or clothes foresee a centrifugal cycle at the end of the working cycle, in order to eliminate the highest possible quantity of liquid with which the cloth is drenched.

Since the masses involved in this centrifugal cycle are rather important and since the speed of revolution of the basket is rather high, should the load not be well distributed, non-barycentrical centrifugal forces will occur within the basket, which cause strong stresses which will discharge themselves both on the elastic support structure of the basket and on the fixed frame of the washing machine. Since it is almost impossible to evenly distribute the weight within the basket, one of the methods mostly used to balance the weight foresees the introduction, during the centrifugal cycle, of controlled quantities of water into channels arranged along the generating lines of the basket.

Thus the centrifugal force arising from the introduction of these new quantities of water added to the centrifugal force arising from the weight of the processed mass contained in the basket give together a barycentric result.

In order to obtain the introduction of the correct amount of water into the channels, the known technique uses methods for detecting the unbalance, which activate for predetermined periods of time the opening of solenoid valves connected with the circuits for the introduction of water into the channels of the basket.

The methods used for detecting the unbalance are essentially based on the analysis of the frequency and intensity of the vibrations generated in the supports of the revolving basket. The analysis of said signals identifies the angular position wherein the unbalance is generated and an electronic device proceeds to the excitation of the solenoid valve corresponding to the position diametrically opposite said position, so that the duct letting water into the interested channel is opened. The solenoid valve remains open as long as the unbalance persists, and after that, when the signal is missing, it is closed.

Methods of the just described type are rather costly, because they are delicate and such that they require specialized personnel for their maintenance.

With the purpose of overcoming the described inconveniences, the system of detecting and correcting the unbalances of the revolving basket of industrial washing machines which is the object of the patent application No. 85515/A/88 by the same author of the present invention has been disclosed, wherein the reading of the unbalance signal is obtained through the compression of a fluid within a circuit. The thrust exerted by the force of the unbalance on the structure supporting the basket compresses a fluid and through a transducer it turns into an electric signal activating three or more proximity sensors arranged radially on the structure supporting the basket. The correction of the unbalance occurs when the revolving mass weighing on the basket passes in front of the sensors closing the electric circuits, which in turn open the solenoid valves which let water into the channels of the basket.

Thus a simple and easy-to-maintain system of detecting and correcting the unbalance is obtained, but it, too, presents some inconveniences of its own.

A first inconvenience of the just-described system is its low precision, since, because of the low precision of the detecting method, the adjustment becomes difficult.

Another inconvenience consists in that the system presents a high degree of inertia and, therefore, a rather long response which implies some difficulty of adjustment, particularly when the rotational speed is very high. This entails, as a consequence, the further inconvenience that it is not possible to obtain the immediate correlation between the instant when the unbalance is detected and the instance when the correcting action takes place. Thus long transition periods pass before the perfect adjustment is achieved.

A system of detecting and correcting the unbalance during centifuge according to the preamble of claim 1 is known from DE-A-2 405 051.

It is the purpose of the present invention to overcome all the described inconveniences.

More specifically, the main purpose is that of disclosing a system functioning with a high level of precision for detecting and correcting the unbalance during the centrifugal cycle of a washing machine.

Another purpose is that of disclosing a system with a low degree of inertia and, therefore, offering a great possibility of adjustment, particularly at very high rotational speed, and short periods of time for the response.

The just described purposes and others, which will be better illustrated hereinafter, are reached by means of a system for detecting and correcting the unbalance during the centrifugal cycle of an industrial washing machine with a revolving basket comprising:
- a fixed frame resting on the floor;
- a structure supporting the revolving basket, lodging within the fixed frame and made elastic in relation to it by means of shock-absorbing means;
- a plurality of longitudinal channels arranged around the inner periphery of the revolving basket;
- at least one electric/electronic control panel;
- a plurality of solenoid valves electrically connected with the control panel by means of cables;
- a plurality of ducts for letting the water into the basket which are connected through the previously mentioned solenoid valves with the longitudinal channels of the basket, and is characterized in that an encoder, the body of which is connected with the fixed frame and the revolving disc of which is mechanically connected with a transmission element attached both to the fixed frame and to the structure supporting the revolving basket, detects the unbalance in the washing machine by reading the angular displacement of the encoder revolving disc, when the displacement of the structure supporting the revolving basket in relation to the fixed frame causes the motion of the transmission element which is mechanically connected with the revolving disc of the encoder.

According to a preferred embodiment of the invention, the disc of the encoder is co-axial with a shaft which is made to revolve through a cogged pulley, which is attached to one of its ends and engages a cogged belt, one end of which is attached to the fixed frame of the washing machine, while its opposite end is attached to the support of the revolving basket.

Depending on the rotation of its disc, the encoder sends a signal to the electronic panel which controls the solenoid valves for the inlet of water into the longitudinal channels of the revolving basket, until the balance of the basket is achieved through the immission of the suitable amounts of water.

Advantageously, with the detecting and correcting system according to the invention it is not necessary to search for the angular positions of the channels of the revolving basket into which it is necessary to let in water, since it is possible to proceed by trial and error by starting with any one of the channels and this is possible thanks to the speed of the response of the system which foresees the use of an encoder.

Further scope of applicability of the present invention will become apparent from the detailed description given hereinafter. However, it should be understood that the detailed description and the specific example, while indicating a preferred embodiment of the invention, are given by way of illustration only, since various changes and modifications within the scope of the claims will become apparent to those skilled in the art from this detailed description and from the drawing, wherein:
- Fig. 1 shows in the transversal cross-section and schematically a washing machine with a revolving basket with the application of the system for detecting and correcting the unbalance;
- Fig. 2 shows in an axonometric view the detail of the sensor for detecting and correcting the unbalance, together with the kinematic means for the movements and the control panel;
- Fig. 3 shows the detail of the kinematic means of Fig. 2.

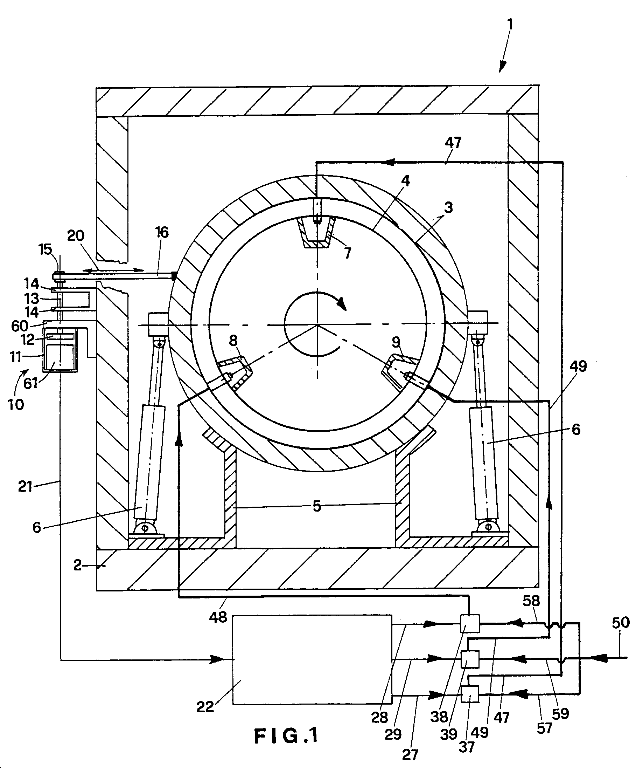

With reference to the mentioned figures, it can be observed in Fig. 1 that the washing machine, indicated as a whole with 1, comprises a fixed frame 2 within which there is the structure 3 supporting the revolving basket 4 which is made elastic by the shock absorbers 6 and the supports 5. Basket 4, which is driven by an electric motor and kinematic means (not represented in the Figure) has in its interior three channels 7, 8, 9 arranged longitudinally on its lateral surface and suited to be filled completely or in part with water through the respective ducts 47, 48, 49. It is obvious, in any case, that said ducts, which, for simplicity sake, have been drawn as if they were directly connected with their respective channels, in reality are connected with said channels through the interposition of water-tight, revolving channels.

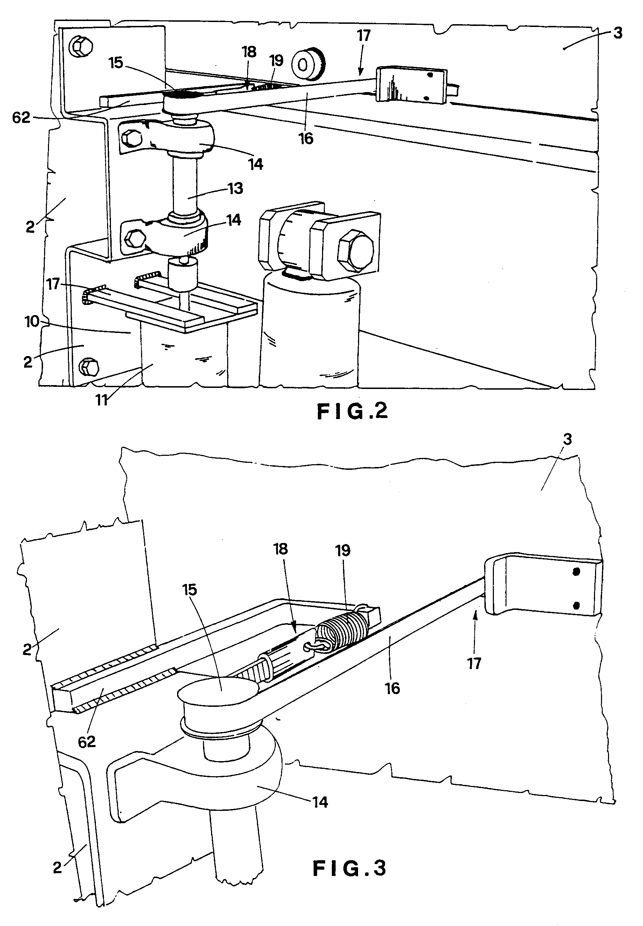

More specifically, it can also be observed in Fig. 1 that an encoder 10 is an integral part of the washing machine. Said encoder 10 has the task of detecting the unbalance and it comprises a body 11, attached through a support 60 to the fixed frame 2 of the washing machine, as can be observed in greater detail in the axionometry of Fig. 2, and a revolving disc 12, arranged in the upper part of body 11. A reading unit 61 contained within body 11 and arranged underneath the revolving disc 12 reads the angular revolutions of the latter. Said disc 12 is connected with a vertical shaft 13 which revolves on the supports 14 attached to the frame 2 of the washing machine and it presents in its upper part a pulley 15. Said pulley 15 is partially surrounded by a cogged transmission belt 16 which, as can be observed in greater detail in Fig. 3, has its end 17 attached to the structure 3 supporting the revolving basket 4, while its opposite end 18 is attached to the fixed frame 2 of the washing machine through a square 62 and the interposition of an elastic element, in the specific case, a spring 19.

When the revolving basket 4, during the centrifugal cycle of the washing machine, revolves in the clockwise or in the anti-clockwise direction, the structure 3 supporting the revolving basket oscillates, supported by the shock absorbers 6 and the supports 5, the displacements being proportional to the value of the unbalance. Said displacements, indicated by the arrow 20, are transmitted to the cogged belt 16 which moves elastically while it is kept stretched by spring 19 and causes the vertical shaft 13, which it engages, to rotate. The extent of the angular displacements of the vertical shaft 13 is in proportion to the extent of the linear displacements 20 of the belt 16 and, therefore, of the structure 3 supporting the revolving basket 4.

Therefore, the reading unit 61 contained within the body 11 of the encoder 10 reads on the disc 12 the extent of such angular displacement. Through the cable 21 an electric signal which is proportional to the amplitude of the angular displacement of the disc 12 is sent to the electric/electronic control panel 22 which, after processing said signal sends an electric impulse through the cables 28 or 29 or 27 to the respective solenoid valves 38 or 39 or 37, so that, when opening, they let water into the respective longitudinal channels 8 or 9 or 7 through the respective ducts 48 or 49 or 47.

Thus, for instance, when the electronic control panel 22 is reached through cable 21 by an unbalance signal, through cable 28, for instance, it opens valve 38. Valve 38 lets water through duct 48 into the longitudinal channel 8, said water coming from the supply duct 58 which is connected with the main 50. The introduction of this mass of water generates as a reaction a variation of the unbalance within the revolving basket 4, which can be such as to increase or decrease the amplitude of the displacement in the direction of arrow 20 of the revolving basket 4. Assuming that the introduction of water into the longitudinal channel 8 causes a positive reaction in the sense that it creates an increase of the value of the unbalance in the revolving basket 4 and, therefore, an increase in the amplitude of the displacement of the same in the direction of arrow 20, it means that the immission of water into channel 8 is wrong, since the weight in correspondence with the area where there already is an unbalance has been increased.

This fact is immediately detected by the encoder 10, because the reading elements 61 existing within its body 11 read on the disc 12 an increase of the angular revolution and, therefore, through cable 21 it transmits the information to the electronic control panel 22, which processes the information and closes the valve 38. At the same time the same control panel transmits, for instance through cable 29, the signal for opening valve 39, so that through the duct 49 water coming from duct 59, which in turn is connected with the main 50, begins to pour into the longitudinal channel 9. If the immission of water into channel 9 again causes a positive reaction, i.e. it causes an increase of the oscillations of the revolving basket 4, it means that the immission of water into channel 9 is wrong, too. The increase of the oscillation causes an increase of the angular revolution of the disc 12 of the encoder 10, said increase being immediately read by the reading elements 61 within the encoder 10 and it is transmitted to the control panel 22, which sends a signal to close valve 39. Then the control panel sends a signal to open valve 37 through cable 27.

Valve 37 lets water coming from duct 59, which is connected with the main 50, into the longitudinal channel 7 through duct 47. Assuming that this immission of water creates a negative reaction, i.e. that it causes a decrease in the oscillations of the revolving basket 4, the consequence arising therefrom is a reduction of the amplitude of the displacement in the direction 20, which is transmitted through the cogged belt 16 to the vertical shaft 13 and, therefore, a decrease in the angular displacement of the disc 12 of the encoder. Said decrease in the angular revolution is detected by the reading elements 16 of the encoder 10 and it is transmitted through the cable 21 to the control panel 22, which keeps the solenoid valve 37 open until the unbalance in the revolving basket 4 is eliminated.

It will be observed that with the system of detecting the unbalance by means of the just described encoder 10, the opening of the solenoid valves supplying the longitudinal channels and the reaction caused by the opening of the solenoid valves through reading the amplitude of the angular displacement of the disc 12 of encoder 10 occurs in a practically real fraction of time, since the inertia in the detecting and correcting system is extremely low. By exploiting this characteristic it is no longer necessary to previously check which channel needs to be filled with water, as is the case in the systems according to the known techniques, since, thanks to the reaction speed of the detecting and correcting system, the system is able to correct itself within extremely short periods of time, whenever the corrective action is wrong and causes a positive reaction. Experimental tests performed on prototypes have proven that any type of unbalance can be corrected within periods of time shorter than 10 seconds, regardless of the revolution speed of the basket.

This speed of reaction of the detecting and correcting system is not at the expense of the precision of the correction, its degree being very high, particularly when the speeds of revolutions are very high, while the known systems only offer a low degree of precision.

The just described detecting and correcting system according to the invention, and more specifically the means used for the transmission of the oscillations of the structure 3 and of the revolving basket 4 to the encoder 10 may differ from those which have been described. Thus, for example, the transmission of the revolution of the vertical shaft 13 can be achieved through kinematic means differing from the described cogged belt 16, for instance, through a chain or similar means.

## Claims

1. A system for detecting and correcting the unbalance during the centrifugal cycle of an industrial washing machine with a revolving basket comprising:
- a fixed frame (2) resting on the floor;
- a structure (3) supporting the revolving basket (4) lodged within the fixed frame (2) and made elastic in relation to it by means of shock-absorbing means (5, 6);
- a plurality of longitudinal channels (7, 8, 9) arranged around the inner periphery of the revolving basket (4);
- at least one electric/electronic control panel (22);
- a plurality of solenoid valves (37, 38, 39) electrically connected with the control panel (22) by means of cables (27, 28, 29);
- a plurality of ducts (47, 48, 49) for letting the water into the basket (4) which are connected through the previously mentioned solenoid valves (37, 38, 39) with the longitudinal channels (7, 8, 9) of the basket (4),
and is characterized in that an encoder (10), comprising a body which is connected with the fixed frame (2) and a revolving disc (12) which is mechanically connected with a transmission element (16) attached both to the fixed frame (2) and to the structure (3) supporting the revolving basket (4), detects the unbalance in the washing machine by reading the angular displacement of the encoder revolving disc, when the displacement of the structure (3) supporting the revolving basket (4) in relation to the fixed frame (2) drives the transmission element (16) which is mechanically connected with the revolving disc of the encoder.

2. A detecting and correcting system according to claim 1, characterized in that the correction of the unbalance in the washing machine occurs within a real time by reading the unbalance through the solenoid valves (37, 38, 39) which in cyclic succession let water into the longitudinal channels (7, 8, 9) of the revolving basket, starting from any one of said channels.

3. A detecting and correcting system according to claim 1, characterized in that the element transmitting the motion to the disc (12) of the encoder (10) is a cogged belt (16), presenting one of its ends (18) attached to the fixed frame (2) by means of a spring (19), its opposite end (17) being attached to the structure (3) supporting the revolving basket (4) and engaging a pulley (15) mounted on the end of a shaft (13) having its opposite end co-axially attached to the revolving disc (12) of the encoder.

4. A detecting and correcting system according to claim 1, characterized in that each solenoid valve (37, 38, 39) is connected through a duct (47, 48, 49) with one longitudinal channel (7, 8, 9) arranged within the revolving basket (4) and in that it is supplied with water through a duct (57, 58, 59) connected with a single supply main (50), each one of said solenoid valves being controlled by a control panel (22) with which it is connected through a respective electric cable (27, 28, 29).

## Patentansprüche

1. System zum Aufnehmen und zur Richtigstellung der Unwucht während des Schleudervorgangs in einer Industrie-Waschmaschine mit einer Dreh-Trommel, die folgendes einschließt:
- einen festen auf dem Boden stehenden Rahmen (2)
- ein Gerüst (3), das die Dreh-Trommel (4) stützt und innerhalb des festen Rahmens (2) angeordnet ist und im Verhältnis dazu durch federnde Mittel (5, 6) elastisch gemacht wird;
- eine Mehrzahl von longitudinalen Kanälen (7,8,9), die um den Umfang der Dreh-Trommel (4) angeordnet sind;
- mindestens eine elektrische/elektronische Steuertafel (22);
- eine Mehrzahl von Magnetventilen (37, 38, 39), die elektrisch durch Kabel (27, 28, 29) mit der Steuertafel (22) angeschaltet sind;
- eine Mehrzahl von Röhren (47, 48, 49) zur Zuleitung des Wassers in die Trommel (4), die durch die vorher erwähnten Magnetventile (37, 38, 39) mit den Kanälen (7, 8, 9) der Trommel (4) verbunden sind,
und dadurch gekennzeichnet ist, daß ein Meßgeber (10), der einen Körper einschließt, der mit dem festen Rahmen (2) verbunden ist, und eine Dreh-Scheibe (12), die mechanisch mit einem Antriebelement (16) verbunden ist, das seinerseite mit dem festen Rahmen (2) und mit dem Gerüst (3), das die Trommel (4) stützt verbunden ist, die Unwucht in der Waschmaschine aufnimmt, wenn die Winkel-Verschiebung des Gerüsts (3), das die Trommel (4) stützt im Verhältnis zum festen Rahmen (2), das Antriebelement (16), das mechanisch mit der Drehscheibe des Meßgebers verbunden ist, betätigt.

2. System zum Aufnehmen und zur Richtigstellung nach Anspruch 1, dadurch gekennzeichnet, daß die Richtigstellung der Unwucht in der Waschmaschine in der Echtzeit erfolgt, indem die Unwucht durch die Magnetventile (37, 38, 39) aufgenommen wird, die in zyklischer Folge das Wasser in die longitudinalen Kanäle (7, 8, 9) der Drehtrommel einläßt, wobei der Zyklusbeginn von irgendeinem der genannten Kanäle erfolgen kann.

3. System zum Aufnehmen und zur Richtigstellung nach Anspruch 1, dadurch gekennzeichnet, daß das Element, das die Scheibe (12) des Meßgebers (10) betreibt, aus einem Zahnkeilriemen (16) besteht, der ein seiner Enden (18) am festen Rahmen durch eine Feder (19) befestigt aufweist, wobei das andere Ende (17) am Gerüst (3), das die Dreh-Trommel (4) stützt, befestigt ist und in eine Keilriemenscheibe (15) eingreift, die am Ende einer Welle (13) angebaut ist, dessen gegenüberliegendes Ende ko-axial an der Dreh-Scheibe (12) des Meßgebers (10) befestigt ist.

4. System zum Aufnehmen und zur Richtigstellung nach Anspruch 1, dadurch gekennzeichnet, daß jedes Magnetventil (37, 38, 39) durch ein Rohr (47, 48, 49) mit einem innerhalb der Dreh-Trommel (4) angeordneten longitudinalen Kanal (7, 8, 9) verbunden ist, und daß es mit Wasser durch ein Rohr (57, 58, 59) versorgt wird, wobei die genannten Röhre mit einem einzigen Haupt-Versorgungsrohr (50) verbunden sind, wobei jedes der genannten Magnetventile durch eine Steuertafel (22) gesteuert wird, womit es durch ein entsprechendes Kabel (27, 28, 29) angeschaltet ist.

## Revendications

1. Système pour le relevé et la correction du déséquilibre pendant la centrifugation d'une machine à laver industrielle avec un panier tournant comprenant:
- un châssis fixe (2) posant sur le sol;
- une structure (3) supportant le panier tournant (4) logée dans le châssis fixe (2) et rendue élastique par rapport à celui-ci par des moyens amortissants (5, 6);
- une pluralité de canaux longitudinaux (7, 8, 9) disposés autour de la périphérie intérieure du panier tournant (4);
- au moins un panneau électrique/électronique de contrôle (22);
- une pluralité de soupapes électriques (37, 38, 39) connectées électriquement avec le panneau de contrôle (22) par des câbles (27, 28, 29);
- une pluralité de conduits (47, 48, 49) pour laisser entrer l'eau dans le panier (4) qui sont joints par les dites soupapes électriques (37, 38, 39) aux canaux longitudinaux (7, 8, 9) du panier (4),
et il est caractérisé en ce que un encoder (10), comprenant un corps qui est joint au châssis fixe (2) et un disque tournant (12) qui est joint mécaniquement à un élément de transmission (16) attaché au châssis fixe (2) et à la structure (3) supportant le panier tournant (4), relève le déséquilibre dans la machine à laver en lisant le déplacement angulaire du disque tournant de l'encoder, lorsque le déplacement de la structure (3) supportant le panier tournant (4) par rapport au châssis fixe (2) conduit l'élément de transmission (16) qui est joint mécaniquement au disque tournant de l'encoder.

2. Un système pour le relevé et la correction selon la revendication 1, caractérisé en ce que la correction du déséquilibre dans la machine à laver a lieu en un temps réel en lisant le déséquilibre par le moyen des soupapes électriques (37, 38, 39) qui laissent entrer l'eau dans les canaux longitudinaux (7, 8, 9) du panier tournant en succession cyclique, à partir de n'importe lequel de dits canaux.

3. Système pour le relevé et la correction selon la revendication 1, caractérisé en ce que l'élément qui transmet le mouvement au disque (12) de l'encoder (10) est une courroie dentée (16) qui présente une de ses extrémités (18) attachée au châssis fixe (2) au moyen d'un ressort (19), son extrémité opposée (17) étant attachée à la structure (3) supportant le panier tournant (4) et engrenant une poulie (15) montée sur l'extrémité d'un arbre (13) ayant son extrémité opposée qui est attachée co-axiallement au disque tournant (12) de l'encoder.

4. Un système pour le relevé et la correction selon la revendication 1, caractérisé en ce que chaque soupape électrique (37, 38, 39) est jointe par un conduit (47, 48, 49) à un canal longitudinal (7, 8, 9) disposé dans le panier tournant (4) et en ce qu'elle est fournie d'eau par un conduit (57, 58, 59) joint à un seul conduit principal d'alimentation (50), chacune des dites soupapes électriques étant contrôlée par un panneau de contrôle (22) avec lequel elle est branchée par un câble électrique (27, 28, 29) correspondant.
